# EUROPEAN PATENT SPECIFICATION

(11) **EP 0 230 453 B1**
(45) Date of publication and mention of the grant of the patent: **23.02.1994**
(21) Application number: 86904635.9
(22) Date of filing: 03.07.1986
(51) Int. Cl.: F16B 21/18, F16B 39/10

(54) **LOCKING FASTENER**
SICHERUNGSBOLZEN
ELEMENT DE FIXATION BLOQUANT

(30) Priority: 17.07.1985 US 755907
(43) Date of publication of application: 05.08.1987
(73) Proprietor: BENNETT, Bruce Allan, San Rafael, CA 94901 (US)
(72) Inventor: BENNETT, Bruce Allan, San Rafael, CA 94901 (US)
(74) Representative: Alexander, Thomas Bruce
(86) International application number: US8601428
(87) International publication number: WO8700592

(56) References cited:
- BE-B- 517 186
- DE-B- 1 143 364
- DE-C- 971 597
- FR-A- 583 366
- FR-A- 637 364
- FR-B- 15 467
- GB-A- 468 629
- GB-A- 1 065 822
- GB-A- 2 176 560
- US-A- 274 188
- US-A- 1 088 515
- US-A- 1 209 460
- US-A- 2 741 290
- US-A- 3 493 026
- US-A- 3 875 985
- US-A- 4 284 114

## Description

This invention pertains generally to threaded fasteners such as bolts and nuts, and more particularly to a fastener which is secured against movement from a set position.

Heretofore, a number of techniques have been employed to secure bolts and nuts and prevent them from working loose when subjected to vibration. Such techniques have included the use of lock washers, locking fluids, various mechanical restraints, and even welding the fasteners in place. All of these techniques have certain limitations and disadvantages. Some are too complicated for practical use, some are ineffective, and some can be employed only in certain specific applications. With many of these techniques, it is not possible to remove the fastener once it has been secured without destroying either the locking device or the fastener itself.

It is in general an object of the invention to provide a new and improved fastener which is secured against movement from a set position.

It is known from US-A-3875985 to provide a nut or bolt with a rotation lock plate secured by a washer which is a press fit into grooves formed in the periphery of the bolt head or nut.

According to the present invention there is disclosed a locking fastener comprising a threaded part having an external surface of non-circular contour, a lock plate having an opening in which the surface of non-circular contour is received to prevent rotation of the threaded part relative to the lock plate, a peripheral groove formed in the surface of non-circular contour, and a resilient, removable retainer clip mounted in the groove to retain the locking plate on the threaded part, characterised in that the groove has an inner wall of smaller diameter than the retainer clip and a width greater than the thickness of the retainer clip.

An advantage of the invention is to provide a fastener of the above character which is easily installed and removed, reliable and suitable for use in a wide variety of applications.

In a preferred embodiment a threaded fastener such as a bolt or nut is provided with a locking plate which fits over the fastener and is prevented from rotation by engagement with a stationary object such as a protrusion on the part to be secured. The plate has an opening with a contour which mates with the outer contour of the fastener to prevent rotation of the fastener, and the plate is retained on the fastener by a retainer mounted in a groove formed in the fastener itself.

Figure 1 is an exploded isometric view of one embodiment of a locking fastener according to the invention.

Figure 2 is a cross-sectional view of the fastener of Figure 1 in its assembled and operative position.

Figure 3 is an isometric view, partly broken away, of a second embodiment of a locking fastener according to the invention.

Figures 4 and 5 are top plan views of additional embodiments of locking plates for use in the fastener of the invention.

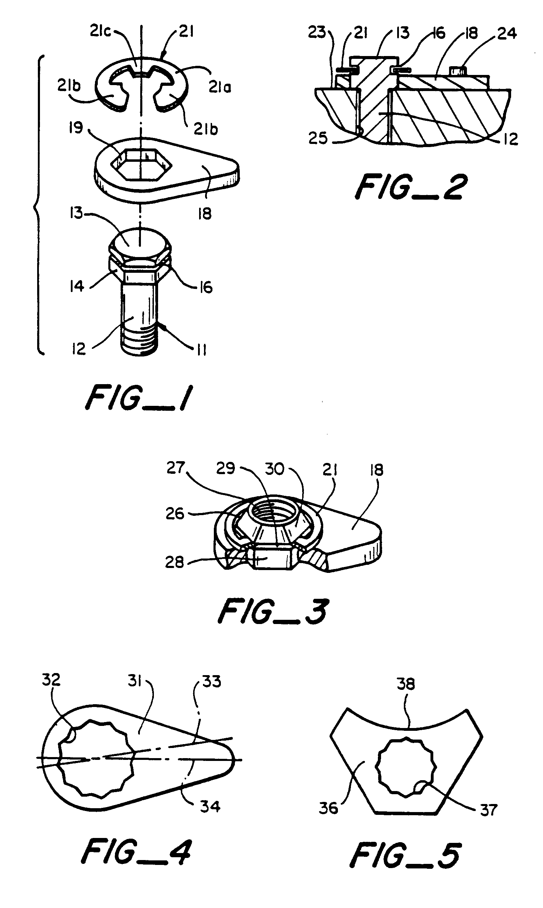

As illustrated in Figure 1, the locking fastener comprises a threaded fastener or part in the form of a bolt 11 which has a threaded shank portion 12 and a hexagonal head portion 13. The head portion has a non-circular contour in plan view, with flat surfaces 14 arranged in opposing pairs for engagement by a wrench. A peripheral groove 16 is formed in the head portion toward the outer end of the head portion and opens through the flat surfaces.

A locking plate 18 with a hexagonal opening 19 fits over the head portion of the bolt, with the head portion extending through the hexagonal opening. The size and shape of the opening are such that the head portion of the bolt can pass freely through the opening in an axial direction, but it cannot rotate within the opening. The plate has a generally teardrop shape and is adapted to abut against a stationary object such as a protrusion on the part to be held, thus preventing the bolt from rotating in the direction which would cause it to loosen.

The locking plate is retained axially on the bolt by a retainer clip 21 mounted in groove 16, with a diameter greater than the diameter of opening 19. In one preferred embodiment, the retainer clip is a spring clip or a generally C-shaped clip of resilient material which grips the bolt head securely yet is easily installed and removed.

In Figure 2, the fastener is illustrated in connection with a workpiece 23 which has a protrusion 24 projecting therefrom. The bolt is inserted into a hole 25 in the workpiece and tightened in the conventional manner with a wrench which engages the head portion of the bolt. Thereafter, locking plate 18 is placed over the head portion of the bolt and positioned to abut against protrusion 24 in the event that the bolt should begin to loosen. Retainer clip 21 is inserted in groove 16, and the locking plate is thus retained between the workpiece and the retainer clip.

The embodiment of Figure 3 is similar to the embodiment of Figure 1, and like references designate corresponding elements in the two embodiments. In the embodiment of Figure 3, however, the fastener is a nut 26 having a hexagonal body with an internal thread 27 and external flat surfaces 28 arranged in opposite pairs for engagement with a wrench. Retainer clip 21 is mounted in a groove 29 which opens through surfaces 28 toward one end of the nut. Locking plate 18 fits over the nut and prevents rotation of the nut in the same manner that it prevents rotation of the bolt in the embodiment of Figure 1.

The outer end surface 30 of the nut adjacent to groove 29 is bevelled or tapered to facilitate installation of the retainer clip. When pressed onto the nut over this surface, the clip opens and snaps into groove 29. This enables the retainer to be installed in an axial direction and permits the device to be employed in places where there is little or no access to the sides of the fastener. The head of a bolt or other fastener can be bevelled or tapered in a similar manner.

The locking plate 31 illustrated in Figure 4 is similar to locking plate 18 except it has a 12-point opening 32 instead of a hexagonal opening. The opening is oriented to provide an offset of 7.5% between its axis of symmetry 33 and the centerline 34 of the plate. The plate can be positioned with either side up, and with the offset it can be oriented in any one of 24 different positions about the bolt or nut. The hexagonal opening 19 in plate 18 can be offset in a similar manner to provide 6 additional positions when that plate is turned over.

The locking plate can be of any suitable size and shape for a particular application, and Figure 5 illustrates an embodiment which is particularly suitable for securing the nuts or bolts which hold an exhaust header on an engine. This plate, designated by the reference numeral 36, has a 12-point opening 37 and an arcuate side edge 38 which mates with the header pipe to prevent the plate from turning.

While the invention has been described with specific reference to bolts and nuts, it can be employed with lag screws and other threaded fasteners as well. The locking plate can be secured against rotation by abutting engagement with any nearby stationary object such as a protrusion on the part being held, another bolt or nut, or a dowel pin.

The invention has a number of important features and advantages. It is easily installed and removed, and it can be employed in both large and small spaces. It can be tightened with any type of wrench employed with conventional nuts and bolts in a similar space. No special tools are required to install and remove the locking plate and retainer clip. The clip and plate can be removed and reinstalled repeatedly without damage to either these parts or to the fastener itself, and without any loss of security. The condition of the parts can be observed visually, and the parts are easily removed and tested if desired.

## Claims

1. A locking fastener comprising a threaded part (11, 26) having an external surface (14, 28) of non-circular contour, a lock plate (18, 31, 36) having an opening (19, 32, 37) in which the surface of non-circular contour is received to prevent rotation of the threaded part relative to the lock plate, a peripheral groove (16, 29) formed in the surface of non-circular contour, and a resilient, removable retainer clip (21) mounted in the groove to retain the locking plate on the threaded part, characterised in that the groove (16, 29) has an inner wall of smaller diameter than the retainer clip (21) and a width greater than the thickness of the retainer clip.

2. A locking fastener as defined by claim 1, further characterised in that the threaded part is a bolt.

3. A locking fastener as defined by claim 1, further characterised in that the threaded part is a nut.

4. A locking fastener as defined by any preceding claim, further characterised in that the retainer clip comprises a generally C-shaped clip having three circumferentially spaced radial projections engageable with the groove.

5. A locking fastener as defined by any of the preceding claims, further characterised in that the threaded part has a tapered end surface (30) adjacent to the groove, and the retainer clip (21) expands circumferentially and snaps into the groove when pushed onto the threaded part over the tapered surface.

## Patentansprüche

1. Sicherungsbefestigungseinrichtung mit einem Gewindeteil (11, 26), das eine Außenfläche (14, 28) mit einer nicht kreisförmigen Kontur aufweist, mit einer Sicherungsplatte (18, 31, 36), die eine Öffnung (19, 32, 37) aufweist, in der die Fläche mit der nicht kreisförmigen Kontur aufgenommen ist, um eine Drehung des Gewindeteils relativ zu der Sicherungsplatte zu verhindern, einer in der Fläche mit nicht kreisförmiger Kontur ausgebildeten Umfangsnut (16, 29) und einem elastischen und entfernbaren Sprengring (21), der in der Nut angebracht ist, um die Sicherungsplatte auf dem Gewindeteil zu halten, dadurch gekennzeichnet, daß die Nut (16, 29) eine Innenwand mit geringerem Durchmesser als der Sprengring (21) und eine Breite aufweist, die größer als die Dicke des Sprengrings ist.

2. Sicherungsbefestigungseinrichtung nach Anspruch 1, weiterhin dadurch gekennzeichnet, daß der Gewindeteil ein Bolzen ist.

3. Sicherungsbefestigungseinrichtung nach Anspruch 1, weiterhin dadurch gekennzeichnet, daß der Gewindeteil eine Mutter ist.

4. Sicherungsbefestigungseinrichtung nach einem der vorhergehenden Ansprüche, weiterhin dadurch gekennzeichnet, daß der Sprengring einen insgesamt C-förmigen Ring umfaßt, der drei im Umfangsabstand angeordnete radiale Vorsprünge aufweist, die mit der Nut in Eingriff bringbar sind.

5. Sicherungsbefestigungseinrichtung nach einem der vorhergehenden Ansprüche, weiterhin dadurch gekennzeichnet, daß der Gewindeteil angrenzend an die Nut eine konische Stirnfläche (30) aufweist, und daß sich der Sprengring (21) in Umfangsrichtung aufweitet und in die Nut schnappt, wenn er auf den Gewindeteil über die konische Fläche geschoben wird.

## Revendications

1. Organe de fixation à blocage comportant une partie filetée (11, 26) ayant une surface extérieure (14, 28) d'un contour non circulaire, une plaque de blocage (18, 31, 36) ayant une ouverture (19, 32, 37) dans laquelle est reçue la surface du contour non circulaire afin d'empêcher la partie filetée de tourner par rapport à la plaque de blocage, une gorge périphérique (16, 29) formée dans la surface du contour non circulaire, et une attache élastique et amovible (21) de retenue montée dans la gorge pour retenir la plaque de blocage sur la partie filetée, caractérisé en ce que la gorge (16, 29) comporte une paroi intérieure d'un diamètre inférieur à celui de l'attache (21) de retenue et une largeur supérieure à l'épaisseur de l'attache de retenue.

2. Organe de fixation à blocage selon la revendication 1, caractérisé en outre en ce que la partie filetée est une vis.

3. Organe de fixation à blocage selon la revendication 1, caractérisé en outre en ce que la partie filetée est un écrou.

4. Organe de fixation à blocage selon l'une quelconque des revendications précédentes, caractérisé en outre en ce que l'attache de retenue comprend une attache de forme globalement en C ayant trois saillies radiales espacées circonférentiellement et pouvant être engagées avec la gorge.

5. Organe de fixation selon l'une quelconque des revendications précédentes, caractérisé en outre en ce que la partie filetée présente une surface extrême effilée (30) adjacente à la gorge, et l'attache (21) de retenue s'expanse circonférentiellement et s'incliquette dans la gorge lorsqu'elle est amenée sur la partie filetée en étant pousée sur la surface effilée.
